# DEMANDE DE BREVET EUROPEEN

(11) **EP 1 297 738 A1**
(43) Date de publication de la demande: **02.04.2003**
(21) Numéro de dépôt: 02356175.6
(22) Date de dépôt: 16.09.2002
(51) Int. Cl.: A01G 9/02, A01G 27/02

(54) **Bac pour végétaux avec réserve d'eau étanche**

(30) Priorité: 28.09.2001 FR 0112797
(71) Demandeur: Riviera, 01100 Oyonnax (FR)
(72) Inventeur: Bianchi, Josiane, 01100 Bellignat (FR)
(74) Mandataire: Guerre, Dominique

(57) **Abrégé**

Ce bac pour végétaux avec réserve d'eau comprend :
a) un bac (2) en matière plastique,
b) une grille (6) de retenue et d'humidification de la masse terreuse, ladite grille étant en appui sur les saillies internes (5) du bac et séparant ce bac en une partie supérieure (8), apte à recevoir la masse terreuse, et une partie inférieure (7), formant réserve d'eau,
c) et une fenêtre (17) de visualisation du niveau d'eau dans le bac.

Selon l'invention, les parois du bac (2), respectivement, de fond (3) et périphérique (4), sont continues et étanches, donc sans perforations, de manière que, après mise en place de la masse terreuse (9) sur la grille (6) de retenue, la réserve d'eau (7) ne communique avec l'extérieur qu'à travers cette masse terreuse (9), et que les variations de niveau de l'eau génèrent, dans les deux sens, une aération dynamique et forcée de la masse terreuse (9).

## Description

L'invention est relative aux bacs destinés à accueillir divers végétaux et espèces florales et contenant une réserve d'eau pour assurer l'humidification de la masse terreuse et des racines.

Dans ces bacs, la réserve d'eau, formée en partie inférieure, est séparée de la masse terreuse, disposée dans la partie supérieure du bac, par une grille de retenue équipée d'une paroi diffusante alimentée par capillarité à partir de la réserve, par exemple par mèche ou par puits de la grille contenant de la terre et pénétrant dans la réserve.

Dans tous les bacs connus, la réserve d'eau communique avec l'extérieur soit par une colonne de remplissage, soit par un orifice ou un conduit de trop plein, soit par le puits de passage de l'indicateur de niveau de l'eau, soit par une cheminée d'aération.

Cette communication entre la réserve d'eau et l'atmosphère extérieure a, dès l'origine, été considérée comme un moyen pour assurer l'aération de la masse terreuse dans le temps. Or, il se révèle que l'air contenu dans la réserve, et qui est à la pression atmosphérique, ne peut que très difficilement pénétrer la masse terreuse disposée au-dessus d'elle et, en conséquence, ne peut pas assurer l'aération de celle-ci, pourtant nécessaire au bon développement du système radiculaire des végétaux.

La présente invention a pour objet de fournir un bac avec réserve d'eau qui remédie à cet inconvénient.

Selon l'invention, les parois du bac respectivement de fond et périphérique, sont continues et étanches, donc sans perforations, de manière que, après mise en place de la masse terreuse sur la grille de retenue, la réserve d'eau ne communique avec l'extérieur qu'à travers cette masse terreuse, et que les variations de niveau de l'eau génèrent dans les deux sens une aération dynamique et forcée de la masse terreuse.

Avec cet agencement, qui est à contre courant des solutions actuelles, l'aération de la masse terreuse est effectuée par un mouvement de va et vient initié par la variation du niveau de l'eau dans la réserve. Ce va et vient comprenant :
- lors de l'arrosage par le haut de la masse terreuse, et grâce au remplissage de la réserve d'eau, une phase de compression de l'air contenue dans la réserve, forçant ce dernier à pénétrer dans la masse terreuse,
- et lors de l'abaissement du niveau de l'eau dans la réserve, suite au transfert par capillarité à la masse terreuse, une phase de détente favorisant la circulation de l'air extérieur à travers la masse terreuse jusqu'à la réserve.

Ce mouvement de va et vient générant des pressions et dépressions de faibles valeurs n'existe pas dans les bacs actuels puisque la réserve d'eau communique directement avec l'extérieur.

Dans une forme de réalisation, la fenêtre de visualisation du bac est composée par une pièce en matière plastique translucide qui est liée de manière étanche à la matière du bac qui l'entoure.

Avantageusement, le bac est surmoulé autour de la pièce en matière plastique translucide formant la fenêtre de visualisation.

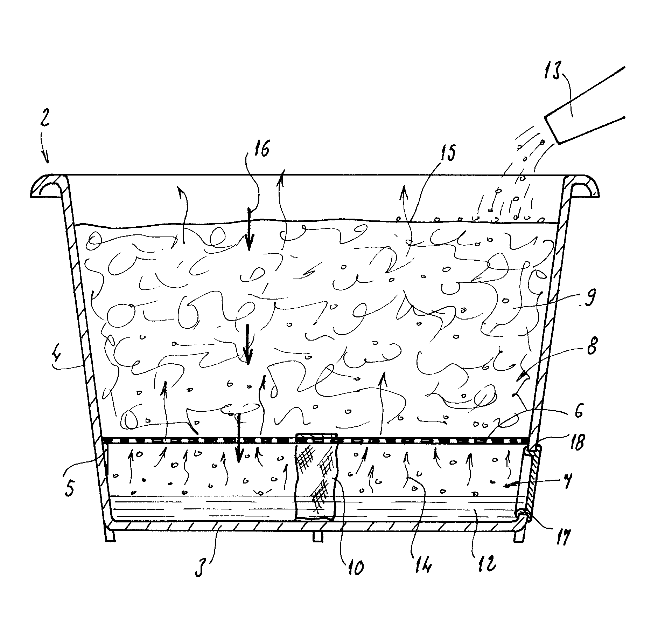

L'invention sera mieux comprise à l'aide de la description qui suit en référence au dessin schématique annexé dont l'unique figure représente, en coupe transversale, une forme d'exécution d'un bac selon l'invention.

De façon connue, ce bac 2 est composé d'un fond 3 et d'une paroi périphérique 4 et porte, à distance de son fond, des saillies ou taquets 5 de positionnement d'une grille 6. Cette grille 6 est équipée d'une paroi diffusante et assure la séparation entre une réserve d'eau inférieure 7 et un volume 8 pour la masse terreuse 9.

La paroi diffusante de la grille 6 est en contact avec la masse terreuse 9 et est alimentée en eau par capillarité, par exemple au moyen d'une mèche 10 plongeant dans l'eau 12 de la réserve 7.

Selon l'invention, les parois, respectivement de fond 3 et périphérique 4 du bac, ne comportent aucun trou, canal, cheminée ou colonne faisant communiquer la partie du bac contenant la réserve 7 avec l'extérieur afin que, grâce à l'étanchéité de ces parois, les échanges avec l'air extérieur ne puissent être effectués qu'à travers la masse terreuse reposant sur la grille 6.

Dans ces conditions, lors de l'alimentation en eau de la réserve 7, alimentation qui se fait par le dessus de la masse terreuse au moyen, par exemple, d'un arrosoir 13, l'augmentation du niveau de l'eau dans la réserve 7 crée au-dessus de ce niveau une légère surpression qui tend à forcer l'air à traverser la grille 6, la paroi diffusante et à pénétrer et circuler dans la masse terreuse 9, comme montré par les flèches 14 et 15.

A l'inverse, au fur et à mesure que le niveau de l'eau 12 baisse dans la réserve 7, suite à l'humidification de la masse terreuse 9, il se crée dans la chambre 7 une légère dépression qui tend à aspirer l'air extérieur en le forçant à traverser la masse terreuse 9, comme montré par les flèches 16.

Ainsi, à chacun des remplissages de la réserve, et au fur et à mesure de l'utilisation de l'eau contenue dans la réserve pour humidifier la masse terreuse, il se crée dans cette masse terreuse une aération dynamique et forcée. Cette aération, qui passe dans la masse terreuse, améliore la qualité de la masse terreuse, et, en conséquence, améliore la croissance des végétaux et espèces florales plantés dans le bac.

Pour éviter un remplissage excessif du réservoir 7, la paroi périphérique 4 de ce bac est équipée d'une fenêtre de visualisation 17, liée de manière étanche en 18, au bord de l'ouverture dans laquelle elle est disposée. Dans une forme de réalisation préférée, cette fenêtre est constituée par une pièce en matière plastique translucide sur laquelle est surmoulée la matière constitutive du pot, et, en particulier, celle de la paroi périphérique 4.

Cet agencement supprime le recours à tout joint et garantit une parfaite étanchéité.

Bien entendu, l'aménagement d'une réserve d'eau étanche est indépendant des formes et dimensions des bacs, du volume attribué à cette réserve et de l'épaisseur de la masse terreuse reposant sur la grille de retenue 6.

## Revendications

1. Bac pour végétaux avec réserve d'eau comprenant :
a) un bac (2) en matière plastique,
b) une grille (6) de retenue et d'humidification de la masse terreuse, ladite grille étant en appui sur les saillies internes (5) du bac et séparant ce bac en une partie supérieure (8), apte à recevoir la masse terreuse, et une partie inférieure (7), formant réserve d'eau,
c) et une fenêtre (17) de visualisation du niveau d'eau dans le bac,
**caractérisé en ce que** les parois du bac (2), respectivement, de fond (3) et périphérique (4), sont continues et étanches, donc sans perforations, de manière que, après mise en place de la masse terreuse (9) sur la grille (6) de retenue, la réserve d'eau (7) ne communique avec l'extérieur qu'à travers cette masse terreuse (9), et que les variations de niveau de l'eau génèrent, dans les deux sens, une aération dynamique et forcée de la masse terreuse (9).

2. Bac à réserve d'eau selon la revendication 1, **caractérisé en ce que** la fenêtre de visualisation (17) est composée d'une pièce en matière plastique translucide qui est liée de manière étanche à la matière de la paroi qui l'entoure.

3. Bac à réserve d'eau selon la revendication 2, **caractérisé en ce que** le bac (2) est surmoulé autour de la pièce en matière plastique translucide formant la fenêtre de visualisation (17).
